(19) **Europäisches Patentamt / European Patent Office / Office européen des brevets**

(11) **EP 1 165 725 B1**

(12) # FASCICULE DE BREVET EUROPEEN

(45) Date de publication et mention
de la délivrance du brevet:
**17.10.2007 Bulletin 2007/42**

(21) Numéro de dépôt: **00945981.9**

(22) Date de dépôt: **22.06.2000**

(51) Int Cl.:
*C10G 47/20* [(2006.01)]     *B01J 29/076* [(2006.01)]

(86) Numéro de dépôt international:
**PCT/FR2000/001733**

(87) Numéro de publication internationale:
**WO 2001/000753 (04.01.2001 Gazette 2001/01)**

(54) **CATALYSEUR ZEOLITHE ET SON UTILISATION EN HYDRORAFFINAGE ET HYDROCRAQUAGE**

ZEOLITKATALYSATOR UND DESSEN VERWENDUNG IN DER WASSERSTOFFBEHANDLUNG UND HYDROCRACKUNG

ZEOLITE CATALYST AND ITS USE IN HYDROREFINING AND HYDROCRACKING

(84) Etats contractants désignés:
**BE DE DK NL**

(30) Priorité: **25.06.1999 FR 9908180**

(43) Date de publication de la demande:
**02.01.2002 Bulletin 2002/01**

(73) Titulaire: **Institut Français du Pétrole
92852 Rueil-Malmaison Cedex (FR)**

(72) Inventeurs:
 • **KASZTELAN, Slavik
  F-92500 Rueil Malmaison (FR)**
 • **MARCHAL-GEORGE, Nathalie
  F-69230 Saint Genis Laval (FR)**
 • **CSERI, Tivadar
  F-92400 Courbevoie (FR)**

 • **LEYRIT, Pierre
  F-92500 Rueil Malmaison (FR)**
 • **DASCOTTE, Philippe
  F-95210 Saint-Gratien (FR)**
 • **ROSENBERG, Elisabeth
  F-92500 Rueil Malmaison (FR)**

(56) Documents cités:
| | |
|---|---|
| **EP-A- 0 348 001** | **EP-A- 0 955 093** |
| **US-A- 3 730 878** | **US-A- 3 853 747** |
| **US-A- 4 297 243** | |

Remarques:
Le dossier contient des informations techniques présentées postérieurement au dépôt de la demande et ne figurant pas dans le présent fascicule.

EP 1 165 725 B1

**Description**

La présente invention concerne un catalyseur utilisable pour l'hydroraffinage et d'hydrocraquage de charges hydrocarbonées sous pression d'hydrogène, ledit catalyseur comprenant au moins une zéolithe, de préférence Y ou bêta, et au moins une matrice oxyde, la zéolithe contenant dans son réseau poreux au moins un métal du groupe VIB (groupe 6 selon la nouvelle notation de la classification périodique des éléments : Handbook of Chemistry and Physics, 76ième édition, 1995-1996), de préférence le molybdène et le tungstène, et/ou au moins un métal du groupe VIII noble ou non noble (groupes 8, 9 et 10) de ladite classification, de préférence le cobalt, le nickel et le fer. La matrice oxyde contient au moins un métal hydro-deshydrogénant de préférence du groupe VIB, avantageusement le molybdène et le tungstène, et/ou au moins un métal du groupe VIII, avantageusement le cobalt, le nickel et le fer. Au moins un élément promoteur (phosphore, bore, silicium) est présent.

La présente invention concerne également le procédé de préparation du dit catalyseur, ainsi que son utilisation pour l'hydrocraquage de charges hydrocarbonées telles que les coupes pétrolières et les coupes issues du charbon contenant du soufre et de l'azote sous la forme de composés organiques, les dites charges contenant éventuellement des métaux et/ou de l'oxygène.

L'hydrocraquage conventionnel de coupes pétrolières est un procédé très important du raffinage qui permet de produire, à partir de charges hydrocarbonées lourdes excédentaires des fractions plus légères telles que essences, kérosènes et gazoles légers que recherche le raffineur pour adapter sa production à la structure de la demande. Par rapport au craquage catalytique, l'intérêt de l'hydrocraquage catalytique est de fournir plus sélectivement des distillats moyens, kérosènes et gazoles, de très bonne qualité.

Les catalyseurs utilisés en hydrocraquage conventionnel sont tous du type bifonctionnels associant une fonction acide à une fonction hydrogénante. La fonction acide est généralement apportée par des supports de type aluminosilicates cristallisés appelés zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que chrome, molybdène et tungstène et au moins un métal du groupe VIII en général non noble tels que le Co, Ni et Fe.

Les supports de type zéolithe par exemple de type Y ou encore béta pure ou désaluminée, ont une très forte acidité. Ces supports assurent donc la fonction acide des catalyseurs d'hydrocraquage. Ces systèmes sont actifs et les produits formés sont de bonne qualité. L'inconvénient de ces systèmes catalytiques à base de zéolithe est une dégradation de la sélectivité en distillats moyens(gazole +kérosène) lorsque l'on augmente la quantité de zéolithe. Ceci limite donc la quantité de zéolithe qui peut être employée dans le catalyseur et donc le niveau d'activité que l'on peut atteindre tout en gardant une bonne sélectivité en distillats moyens.

Le brevet US 3 853 747 décrit des catalyseurs d'hydrocraquage présentant une activité améliorée comprenant une zéolithe aluminosilicate cristalline et un métal hydrogénant appartenant au group VIB de la classification périodique. Ces catalyseurs sont préparés par aj,out du métal appartenant au Groupe VIB à la zéolithe dans un milieu aqueux acide permettant le maintien du métal du Groupe VIB sous une forme insoluble.

La demanderesse a découvert que pour obtenir un catalyseur d'hydrocraquage ayant une forte activité et une bonne sélectivité en distillats moyens, il est avantageux d'amener un élément promoteur et d'introduire dans le réseau poreux de la zéolithe une phase hydrogénante qui vient ainsi renforcer la phase hydro-deshydrogénante présente sur la matrice oxyde, et il est également avantageux d'utiliser une grande quantité de zéolithe. La fonction hydrogénante introduite dans la zéolithe est assurée par au moins un métal ou composé de métal du groupe VI et/ou au moins un métal ou composé de métal du groupe VIII. On peut avantageusement utiliser une combinaison de métaux du groupe VI et/ou une combinaison de métaux du groupe VIII.

Plus précisément, l'invention concerne un catalyseur contenant au moins une matrice, au moins une zéolithe et au moins un élément hydro-deshydrogénant localisé au niveau de la matrice (c'est à dire déposé sur le catalyseur ou contenu dans la matrice), catalyseur dans lequel la zéolithe contient dans son réseau poreux au moins un élément du groupe VIB et éventuellement du groupe VIII, le catalyseur contenant en outre au moins un élément promoteur choisi dans le groupe formé par le bore et le phosphore, ledit catalyseur étant susceptible d'être préparé par le procédé selon la revendication 1 et les revendications dépendantes.

Le catalyseur de la présente invention renferme généralement en % poids par rapport à la masse totale du catalyseur :

- 0,1 à 99%, ou 0,1-98,7 %, ou encore de 0,1 à 95% et de préférence de 0,1-90 %, voire 0,1-85 %, d'au moins d'une zéolithe, de préférence une zéolithe Y ou une zéolithe béta, avantageusement la teneur en zéolithe est d'au moins 5 % pds, de préférence d'au moins 15 %, voire au moins 20%,
- 1 à 99,7 %, ou 1 à 98,8%, de préférence de 10 à 98% et de manière encore plus préférée de 15 à 95% d'au moins une matrice oxyde amorphe, de préférence une alumine, ou une silice-alumine,
- au moins l'un des éléments des groupes VIB et/ou VIII à raison de :

- • 0,1 à 40%, de préférence de 3 à 45% et de manière encore plus préférée de 5 à 30% de métaux du groupe VIB (exprimé en % d'oxyde),
- • 0,1 à 30%, de préférence de 0,1 à 25% et de manière encore plus préférée de 0,1 à 20% de métaux du groupe VIII (exprimé en % d'oxyde),

- au plus 20%, ou encore 0,1-20 %, de préférence de 0 à 15% et de manière encore plus préférée de 0 à 10% (exprimé en % d'oxyde), d'au moins un élément promoteur choisi dans le groupe formé par le bore, le phosphore,
- et éventuellement 0-20 %, de préférence 0,1-15 %, ou encore 0,1-10 % d'au moins un élément choisi dans le groupe VII A, de préférence le fluor,

catalyseur dans lequel la zéolithe contient dans son système poreux au moins un des élément du groupe VIB et éventuellement du groupe VIII à raison de (en % poids dans le catalyseur) :

- 0,1 à 10%, de préférence de 0,1 à 5% et de manière encore plus préférée de 0,1 à 3% en poids d'oxyde d'au moins un métal du groupe VIB,
- 0,1 à 10%, de préférence de 0 à 7% et de manière encore plus préférée de 0 à 5% en poids d'oxyde d'au moins un métal du groupe VIII.

Le métal du groupe VIB contenu dans le réseau poreux de la zéolithe peut être le même ou différent de celui contenu dans la matrice. De la même manière le métal du groupe VIII contenu dans la zéolithe peut être le même ou différent de celui contenu dans la matrice.

La mise en évidence de la présence de la phase hydrogénante dans le réseau poreux de la zéolithe peut être effectuée par diverses méthodes connues de l'homme du métier telles que par exemple la microsonde électronique et la microscopie électronique à transmission équipée d'un spectromètre à dispersion d'énergie X avec détecteur permettant l'identification et la quantification des éléments présents dans les cristaux de la zéolithe et dans la matrice oxyde.

Un catalyseur préféré comprend au moins un élément du GVIB dans la zéolithe, au moins un élément du GVIII au niveau de la matrice et au moins un élément promoteur (i.e. localisé principalement au niveau de la matrice et déposé sur la matrice).

Le catalyseur de la présente invention présente une activité en hydrocraquage des coupes hydrocarbonées très élevée et une sélectivité plus importante que les formules catalytiques connues dans l'art antérieur. Sans vouloir être lié par une quelconque théorie, il semble que cette activité particulièrement élevée des catalyseurs de la présente invention est due à la présence conjointe d'une fonction hydrogénante sur la matrice et d'une fonction hydrogénante particulière au sein du réseau poreux de la zéolithe, en combinaison avec la présence d'un élément promoteur.

Plus précisément, une méthode de préparation comprend les étapes suivantes :

a) introduction dans la zéolithe d'au moins un élément du groupe VIB et éventuellement du groupe VIII
b) mélange avec la matrice et mise en forme pour obtenir le support;
c) introduction d'au moins un élément promoteur par imprégnation et introduction d'au moins un élément hydrodeshydrogénant dans la matrice ou sur le support par l'une au moins des méthodes suivantes :

- addition d'au moins un composé dudit élément lors de la mis en forme de façon à introduire au moins une partie dudit élément,
- imprégnation du support avec au moins un composé dudit élément;

d) séchage et calcination du produit final obtenu et éventuellement séchage et/ou calcination des produits obtenus à l'issue des étapes a) ou b) ou après une imprégnation.

L'élément promoteur est principalement localisé sur la matrice. Ainsi l'élément promoteur silicium sous forme amorphe et localisé principalement sur la matrice.

Le silicium introduit principalement localisé sur la matrice du support peut être caractérisé par des techniques telles que la microsonde de Castaing (profil de répartition des divers éléments), la microscopie électronique par transmission couplée à une analyse X des composants du catalyseurs, ou bien encore par l'établissement une cartographie de répartition des éléments présents dans le catalyseur par microsonde électronique. Ces analyses locales vont fournir la localisation des divers éléments, en particulier la localisation de la silice amorphe sur la matrice due à l'introduction du silicium. La localisation du silicium de la charpente de la zéolithe est aussi révélée. Par ailleurs, une estimation quantitative des teneurs locales en silicium et autres éléments peut-être effectuée.

D'autre part, la RMN du solide du $^{29}$Si à rotation à l'angle magique est une technique qui permet de détecter la présence de silice amorphe introduite dans le catalyseur selon le mode opératoire décrit dans la présente invention.

Le catalyseur de la présente invention est préparé selon les trois étapes suivantes :

a) introduction d'au moins un métal du groupe VIB et éventuellement d'au moins un métal du groupe VIII dans la zéolithe suivie d'une calcination sans séchage préalable à une température de 250 à 800°C.

b) mise en forme du mélange de la zéolithe contenant le métal du groupe VIB et/ ou le métal du groupe VIII obtenue à l'étape a) avec la matrice oxyde pour obtenir le support. Une des méthodes préférées de mise en forme dans la présente invention consiste à malaxer la zéolithe dans un gel humide d'alumine pendant quelques dizaines de minutes, puis à passer la pâte ainsi obtenue à travers une filière pour former des extrudés de diamètre compris de préférence entre 0,4 et 8 mm. L'introduction des éléments du groupe VIB et/ou VIII, non compris dans la zéolithe, peut avoir lieu éventuellement à cette étape par addition d'au moins un composé dudit élément, de façon à introduire au moins une partie dudit élément. Cette introduction peut être accompagnée de celle de phosphore, bore, et/ou silicium et éventuellement de celle de l'élément du gourpe VIIA (fluor par exemple). Le solide mis en forme est alors éventuellement séché à une température comprise entre 60 et 250°C et calciné à une température de 250 à 800°C.

c) introduction des éléments du groupe VIB et/ou VIII, élément promoteur (tel que le phosphore), éventuel élément du GVIIA, par dépôt sur le support (calciné ou séché et de préférence calciné) obtenu à l'étape b) lorsqu'ils n'ont pas été introduits en totalité lors de l'étape b). Une méthode de dépôt bien connue de l'homme de métier est l'imprégnation du support par une solution contenant les éléments du groupe VIB et/ou VIII, et élément promoteur (par exemple le phosphore). Le dépôt est ensuite éventuellement suivi d'un séchage à une température comprise entre 60 et 250°C et éventuellement d'une calcination à une température comprise 250 à 800°C.

La matrice oxyde est habituellement choisie dans le groupe formé par les alumines de transition, et les silices-alumines et leurs mélanges. On préfère utiliser des matrices contenant de l'alumine, sous toutes ses formes connues de l'homme du métier, par exemple l'alumine gamma.

La source de zéolithe préférée est la zéolithe Y ou encore la zéolithe béta sous toutes leurs formes. La zéolithe peut être sous la forme hydrogène soit être au moins partiellement échangée avec des cations métalliques, par exemple à l'aide de cations des métaux alcalino-terreux et/ou des cations de métaux de terres rares de numéro atomique 57 à 71 inclus. La zéolithe peut-être au moins en partie (i.e.plus ou moins) désaluminée comme il est bien connu de l'homme du métier.

Les sources d'élément du groupe VIB qui peuvent être utilisées sont bien connues de l'homme du métier. Par exemple, parmi les sources de molybdène et de tungstène on utilise de préférence les oxydes et les sels d'ammonium tels que le molybdate d'ammonium, l'heptamolybdate d'ammonium et le métatungstate d'ammonium.

Les sources d'élément du groupe VIII qui peuvent être utilisées sont bien connues de l'homme du métier. Par exemple, on utilisera les nitrates, les sulfates, les halogénures.

La source de phosphore préférée est l'acide orthophosphorique $H_3PO_4$, mais ses sels et esters comme les phosphates d'ammonium conviennent également. L'acide phosphomolybdique et ses sels, l'acide phosphotungstique et ses sels peuvent également être avantageusement employés. Le phosphore peut par exemple être introduit sous la forme d'un mélange d'acide phosphorique et un composé organique basique contenant de l'azote tels que l'ammoniac, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si(OEt)$_4$, les siloxanes, les polysiloxanes, les silicones, les émulsions de silicone, les silicates d'halogénures comme le fluorosilicate d'ammonium $(NH_4)_2$ SiF$_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium SiF$_4$ ou de sodium $Na_2SiF_6$, Le fluor peut être introduit par exemple par imprégnation d'une solution aqueuse d'acide fluorhydrique ou de fluorure d'ammonium.

La fonction hydrogénante relative à la matrice telle qu'elle a été définie précédemment peut donc être introduite dans le catalyseur à divers niveaux de la préparation et de diverses manières. Elle peut être introduite en partie seulement (cas, par exemple, des associations d'oxydes de métaux des groupes VI et VIII) ou en totalité au moment du malaxage de la source d'alumine et de zéolithe à l'étape b) le reste des élément(s) hydrogénant(s) étant alors introduit après malaxage, et plus généralement après calcination. De façon préférée, le métal du groupe VIII est introduit simultanément ou après le métal du groupe VI, quel que soit le mode d'introduction.

La fonction hydrogénante peut être également introduite par une ou plusieurs opérations d'échange ionique sur le support calciné (zéolithe dispersée dans la matrice alumine), à l'aide de solutions contenant les sels précurseurs des métaux choisis lorsque ceux-ci appartiennent au groupe VIII. La fonction hydrogénante (groupe VIII) se localise alors à la fois dans le réseau poreux de la zéolithe et sur la matrice. Dans ce cas là, il peut être envisagé de limiter la quantité de métal du groupe VIII introduit dans la zéolithe avant sa mise en forme, voire même supprimer cette étape.

Dans ce cas là, le catalyseur est préparé par :

a) éventuelle introduction dans la zéolithe d'au moins une partie d'au moins un éléments du groupe VIII,
b) mélange avec la matrice et mise en forme et calcination pour obtenir le support calciné,
c) échange ionique sur le support calciné avec une solution d'au moins un composé du groupe VIII, et introduction d'au moins un élément promoteur par imprégnation,
d) séchage et calcination du produit final obtenu et éventuellement séchage et/ou calcination des produits obtenus à l'issue de l'étape a).

La fonction hydrogénante relative à la matrice peut être aussi introduite par une ou plusieurs opérations d'imprégnation du support mis en forme et calciné, par une solution des précurseurs des oxydes des métaux des groupes VIII lorsque les précurseurs des oxydes des métaux du groupe VI ont été préalablement introduits au moment du malaxage du support.

La fonction hydrogénante peut enfin être introduite par une ou plusieurs opérations d'imprégnation du support calciné constitué de la zéolithe et de la matrice alumine éventuellement dopée par P, par des solutions contenant les précurseurs des oxydes de métaux des groupes VI et/ou VIII, les précurseurs des oxydes de métaux de groupe VIII étant de préférence introduits après ceux du groupe VI ou en même temps que ces derniers.

Dans le cas où les éléments sont introduits en plusieurs imprégnations des sels précurseurs correspondants, une étape de calcination intermédiaire du catalyseur devra être effectuée à une température comprise entre 250 et 600 °C.

L'introduction du phosphore, du bore dans le catalyseur peut être réalisée à divers niveaux de la préparation et de diverses manières. Une méthode préférée selon l'invention consiste à préparer une solution aqueuse d'au moins un élément du groupe VI et/ou d'au moins un élément du groupe VIII et d'un composé du phosphore, du bore et/ou du silicium et à procéder à une imprégnation dite à sec, dans laquelle on remplit le volume des pores du précurseur par la solution.

L'imprégnation du molybdène et/ou du tungstène peut être facilitée par ajout d'acide phosphorique dans les solutions, ce qui permet d'introduire aussi le phosphore de façon à promouvoir l'activité catalytique. D'autres composés du phosphore peuvent être utilisés comme il est bien connu de l'homme du métier.

Le phosphore, le bore peut être introduit par une ou plusieurs opérations d'imprégnation avec excès de solution sur le précurseur calciné.

Une méthode préférée consiste à déposer, par exemple par imprégnation, le ou les éléments promoteurs choisis sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant le bore.

Les catalyseurs obtenus par la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassée, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) supérieure à 100 $m^2/g$, un volume poreux mesuré par porosimétrie au mercure compris entre 0,2 et 1,5 $cm^3/g$ et une distribution en taille de pores pouvant être monomodale, bimodale ou polymodale. De manière préférée les catalyseurs de la présente invention ont une distribution des pores monomodale.

**Utilisation pour la transformation des coupes hydrocarbonées**

Les catalyseurs ainsi obtenus sont utilisés d'une manière générale pour l'hydrocraquage en particulier de coupes hydrocarbonées de type distillats (kérosène, gazole), distillats sous vide, résidus désasphaltés ou équivalentes, les coupes pouvant être éventuellement préalablement hydrotraitées.

Les charges hydrocarbonées traitées ont des points d'ébullition initiaux d'au moins 150°C, de préférence au moins 350°C et plus avantageusement c'est une coupe bouillant entre 350 et 620°C.

Les coupes hydrocraquées avec le catalyseur de l'invention sont, de préférence , telles que au moins de 80% en volume correspond à des composés dont les points d'ébullition sont d'au moins 320°C et de préférence entre 350 et 620 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Le catalyseur de la présente invention peut être employé dans divers cas de procédé d'hydrocraquage associant un ou plusieurs réacteurs en série avec séparation intermédiaire ou non, avec recyclage du résidu ou non.

Le catalyseur peut ainsi être employé par exemple les procédés en une étape, avec un ou plusieurs catalyseurs avec ou sans recyclage des gaz et du liquide ou en deux étapes avec un ou plusieurs catalyseurs avec ou sans séparation entre les deux réacteurs avec ou sans recyclage des gaz et du liquide.

Les catalyseurs de la présente invention sont de préférence soumis à un traitement de sulfuration permettant de transformer, au moins en partie, les espèces métalliques en sulfures avant leur mise en contact avec la charge à traiter. Ce traitement d'activation par sulfuration est bien connu de l'homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

De préférence, le catalyseur de la présente invention peut être employé pour l'hydrocraquage de coupes (telles que celles de type distillats sous vide) fortement chargées en soufre et azote qui ont été préalablement hydrotraitées. Dans ce cas, le procédé de conversion de coupe pétrolière se déroule en deux étapes, le catalyseur selon l'invention étant utilisé dans la deuxième étape.

Le catalyseur 1 de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et VIII est comprise entre 5 et 40 % en poids et de préférence entre 7 et 30 % en poids et le rapport pondéral exprimé en oxyde métallique en métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore $P_2O_5$ sera d'au plus 15% généralement, de préférence comprise entre 0,1 et 15 % en poids et de préférence comprise entre 0,15 et 10% en poids. Il peut également contenir du bore dans un rapport B/P = 1,02-2 (atomique), la somme des teneurs en B et P exprimée en oxydes étant de 5-15 % poids.

La première étape se déroule généralement à une température de 350-460°C, de préférence 360-450°C, une pression supérieure à 2 Mpa, de préférence supérieure à 5MPa, une vitesse volumique horaire de 0.1-5h$^{-1}$ et de préférence 0.2-2h$^{-1}$ et avec une quantité d'hydrogène d'au moins 100Nl/Nl de charge, et de préférence 260-3000Nl/Nl de charge.

Pour l'étape de conversion avec le catalyseur selon l'invention (ou seconde étape), les températures sont en général supérieures ou égales à 230°C et souvent comprises entre 300°C et 430°C. La pression est en général supérieure à 2 MPa et de préférence supérieure à 5 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$.

Plusieurs mode d'hydrocraquage peut-être utilisés. Dans un premier mode d'hydrocraquage la pression est modérée. Le catalyseur selon l'invention est alors employé à une température en général supérieure ou égale à 230°C ou a 300°C, généralement d'au plus 480°C, et souvent comprise entre 350°C et 450°C. La pression est en général supérieure à 2MPa et inférieure ou égale à 12 MPa. Une plage de pression modérée est particulièrement intéressante, qui est de 7,5-11 MPa, de préférence de 7,5-10 MPa ou encore 8-11MPa et avantageusement de 8,5-10 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 10h$^{-1}$.

Dans un autre mode de réalisation, le catalyseur de la présente invention peut être employé pour l'hydrocraquage dans des conditions de pression d'hydrogène élevées d'au moins 8,5 MPa, de préférence au moins 9 MPa ou au moins 10 MPa. Les coupes traitées sont par exemple de type distillats sous vide fortement chargée en soufre et azote qui ont été préalablement hydrotraitées. Dans ce cas, généralement le procédé de conversion de coupe pétrolière se déroule en deux étapes, le catalyseur selon l'invention étant utilisé dans la deuxième étape.

Pour l'étape de conversion avec le catalyseur selon l'invention, les températures sont en général supérieures ou égales à 230°C et souvent comprises entre 300°C et 430°C. La pression est en général supérieure à 8,5 MPa et de préférence supérieure à 10 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$.

On atteint alors des niveaux de conversion supérieurs à ceux obtenus dans le premier mode décrit précédemment.

Dans ces conditions, les catalyseurs de la présente invention présentent une meilleure activité en conversion et une meilleure sélectivité en distillats moyens que les catalyseurs commerciaux.

Le catalyseur selon l'invention est également utilisable pour l'hydroraffinage (HDS, HDN et hydrogénation d'aromatiques notamment). La température est en général supérieure à 200°C et souvent comprise entre 280°C et 480°C. La pression est en général supérieure à 0,1MPa et souvent supérieure à 1MPa. La présence d'hydrogène est en général nécessaire avec un taux de recyclage d'hydrogène généralement d'au moins 80 et souvent compris entre 100 et 4000 litres d'hydrogène par litre de charge. La vitesse volumique horaire est comprise en général entre 0,1 et 20h-1.

Les exemples suivants illustrent la présente invention sans toutefois en limiter la portée.

### Exemple 1: fabrication d'un catalyseur A non conforme

Le catalyseur A est fabriqué de la façon suivante : on utilise 20 % poids d'une zéolithe Y de paramètre cristallin égal à 2,429 nm et rapport Si/A1 global de 13,6 et de rapport Si/A1 de charpente de 19, que l'on mélange à 80 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air. Les extrudés sont imprégnés à sec, c'est à dire par remplissage du volume poreux par une solution aqueuse d'un mélange d'heptamolybdate d'ammonium, de nitrate de nickel et d'acide orthophosphorique, de manière à déposer 2,2 % en poids d'oxyde de nickel NiO, 12,3 % en poids d'oxyde de molybdène MoO$_3$, 4,4 % en poids d'oxyde de phosphore P$_2$O$_5$ séchés une nuit à 120°C sous air et enfin calcinés sous air à 550°C. Le catalyseur final contient ainsi 16,2 % poids de zéolithe Y.

### Exemple 2 : fabrication d'un catalyseur B non conforme

Le catalyseur B est fabriqué de la façon suivante : on utilise 70 % poids d'une zéolithe Y de paramètre cristallin égal à 2,429 nm et rapport Si/Al global de 13,6 et de rapport Si/Al de charpente de 19, que l'on mélange à 30 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air. Les extrudés sont imprégnés à sec c'est à dire par remplissage du volume poreux par une solution aqueuse d'un mélange d'heptamolybdate d'ammonium, de nitrate de nickel et d'acide orthophosphorique, de manière à déposer 1,5 % en poids d'oxyde de nickel NiO, 7,3 % en poids d'oxyde de molybdène MoO$_3$ et 2,5 % en poids d'oxyde de phosphore P2O5. Les extrudés humides sont ensuite séchés une nuit à 120°C sous air et enfin calcinés sous air à 550°C. Le catalyseur final contient 62,1 % poids de zéolithe Y.

### Exemple 3 : fabrication des catalyseurs C et D conformes

Les catalyseurs C et D sont fabriqués de la façon suivante : on prépare dans un premier temps une poudre de zéolithe Y de paramètre cristallin égal à 2,429 nm et rapport Si/A1 global de 13,6 et de rapport Si/A1 de charpente de 19, que l'on imprègne par une solution aqueuse d'heptamolybdate d'ammonium de manière à déposer 2,4 % en poids de MoO$_3$ par rapport à la zéolithe. Sans séchage préalable, on calcine à 500°C pendant 2h sous air sec.

Pour obtenir le catalyseur C, on utilise 20 % poids de la zéolithe imprégnée de molybdène préparée ci-dessus que l'on mélange à 80 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air. Les extrudés sont imprégnés à sec, c'est à dire par remplissage du volume poreux par une solution aqueuse d'un mélange d'heptamolybdate d'ammonium, de nitrate de nickel et d'acide orthophosphorique, séchés une nuit à 120°C sous air et enfin calcinés sous air à 550°C. La composition de la solution d'imprégnation est calculée de manière à obtenir sur le catalyseur final 2,2 % en poids d'oxyde de nickel NiO, 12,3 % en poids d'oxyde de molybdène $MoO_3$ 4,4 % en poids d'oxyde de phosphore $P_2O_5$ et 16,2 % poids de zéolithe Y.

Pour obtenir le catalyseur D, on utilise une quantité de 70 % poids de la zéolithe imprégnée de molybdène préparée ci-dessus à 30 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air. Les extrudés sont ensuite imprégnés à sec c'est à dire par remplissage par une solution aqueuse d'un mélange d'heptamolybdate d'ammonium, de nitrate de nickel et d'acide orthophosphorique, de manière à déposer 1,5 % en poids d'oxyde de nickel NiO, 5,0 % en poids d'oxyde de molybdène $MoO_3$, 2,5 % en poids d'oxyde de phosphore $P_2O_5$, On sèche une nuit à 120°C sous air et enfin on calcine sous air à 550°C. Compte tenu de la présence initiale de molybdène dans la zéolithe, le catalyseur contient en poids d'oxyde : 1,5 % en poids d'oxyde de nickel NiO, 7,3 % en poids d'oxyde de molybdène $MoO_3$, 2,5 % en poids d'oxyde de phosphore $P_2O_5$. Le catalyseur final contient 60,4 % poids de zéolithe Y.

**Exemple 4 : Analyses des catalyseurs**

Les deux catalyseurs A et C ne contenant que environ 16 % de zéolithe ont été analysés de manière à mettre en évidence la présence ou non de molybdène dans la zéolithe. La mise en évidence de la présence de molybdène dans la zéolithe alors que la phase hydrogénante déposée sur la matrice oxyde, ici l'alumine, contient beaucoup de molybdène est en effet le cas plus difficile en particulier pour les fortes teneurs en zéolithe.

La première méthode employée est la microscopie électronique à transmission équipée d'un spectromètre à dispersion d'énergie X permettant l'identification et la quantification des éléments présents dans les cristaux de la zéolithe.

Pour cela on emploi un microscope électronique à transmission, JEOL 2010R URP équipé d'un spectromètre à dispersion d'énergie X TRACOR lui-même équipé d'un détecteur Z-MAX30. Les extrudés de catalyseurs sont broyés finement dans un mortier. La poudre est incluse dans de la résine pour réaliser des coupes ultrafines d'épaisseur 700 Å pour les deux catalyseurs. Les coupes produites sont recueillies sur une grille en Cu recouverte d'une membrane C à trous servant de support à la préparation. Ces préparations sont séchées sous une lampe I.R. avant d'être introduites dans le microscope électronique à transmission où elles seront soumises à un vide primaire durant quelques minutes puis à un vide secondaire durant toute l'observation. Le microscope électronique permet de parfaitement identifier les cristaux de zéolithe d'une taille d'environ 0,4 micron dispersés dans la matrice alumine. On procède ensuite à un certain nombre d'analyses locales (de 15 à 20) effectuées sur diverses zones de matrice et sur divers cristaux de zéolithes avec un faisceau sonde de 0,1 micron de diamètre. Le traitement quantitatif du signal permet d'obtenir la concentration relative en % atomique des éléments (hors oxygène).

Le tableau 1 résume les résultats obtenus pour les échantillons A et C décrits dans les exemples ci-dessus.

Tableau 1

| Catalyseur | Zone analysée | Si % at. | Al % at. | Ni % at. | Mo % at. | Si/Al at./at. | Ni/Mo at./at. |
|---|---|---|---|---|---|---|---|
| A | Zéolithe | 93 | 6,8 | 0,05 | 0 | 14,8 | - |
| A | Alumine | 1,6 | 91,4 | 2 | 4,9 | 0 | 0,4 |
| C | Zéolithe | 92,5 | 6,1 | 0,05 | 0,8 | 16,6 | 0,06 |
| C | Alumine | 0,3 | 88,9 | 3,7 | 7,1 | 0 | 0,5 |

On observe dans le tableau 1 que le catalyseur A contient des cristaux de zéolithe Y sans molybdène. La quantité de Ni détectée relève de l'imprécision de la mesure. Par contre dans le catalyseur C cette technique d'analyse permet de détecter sans ambiguïté la présence de molybdène dans les cristaux de zéolithe Y.

La seconde technique employée est la microsonde électronique. Quelques extrudés sont enrobés de résine puis polis jusqu'à leur diamètre et métallisés au carbone. On introduit l'échantillon dans un appareil JXM 880 pour analyser en différents points la composition locale en Al, Si, Mo et Ni.

La résolution étant de l'ordre de quelques microns cube, chaque zone analysée contient soit de la zéolithe seule, soit de l'alumine seule, soit un mélange des deux phases.

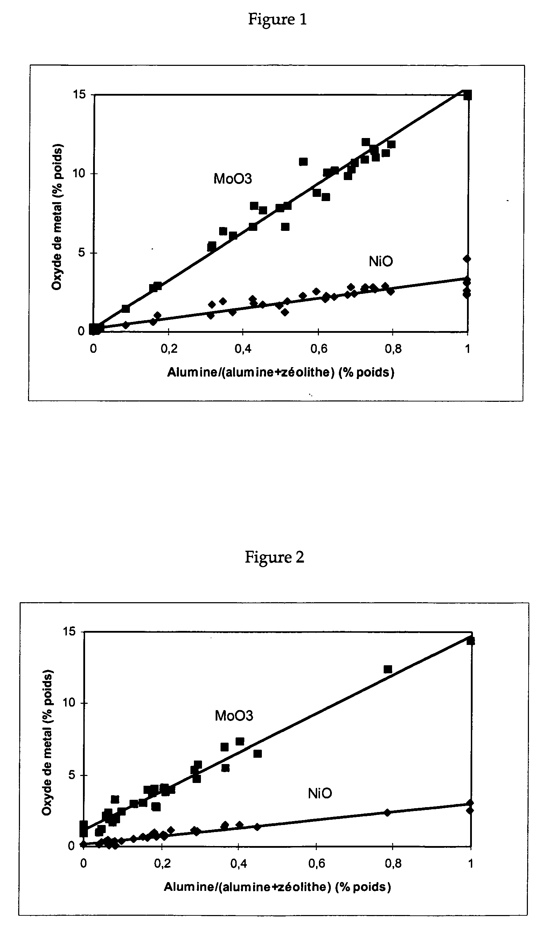

De manière à mieux démontrer la présence de molybdène dans la zéolithe Y dans le cas de l'échantillon C, on procède aux calculs suivants. Pour chaque point d'analyse on mesure la concentration, exprimée en % poids d'oxyde d'Al, Si, Mo et Ni. A partir de la concentration en oxyde d'Al et de Si et du rapport atomique Si/Al de la zéolithe, on déduit

**EP 1 165 725 B1**

le rapport massique $Al_2O_3$/(Zéolithe Y + $Al_2O_3$) en chaque point. On peut ensuite établir un diagramme reliant la concentration en Mo mesurée en fonction du rapport massique $Al_2O_3$/ (Zéolithe Y + $Al_2O_3$). Pour le catalyseur A, les points de mesure ne contenant pas de zéolithe et donc pour lesquels $Al_2O_3$/(Zéolithe Y + $Al_2O_3$)=1 doivent contenir environ 14 à 18% poids de $MoO_3$. Inversement les points de mesure ne contenant pas de matrice et donc pour lesquels $Al_2O_3$/(Zéolithe Y + $Al_2O_3$)=0 ne doivent pas contenir de $MoO_3$. En regroupant toutes les mesures intermédiaires correspondant à des mélanges sur ce type de graphe, on obtient une relation linéaire entre concentration en Mo et le rapport $Al_2O_3$/(Zéolithe Y + $Al_2O_3$) passant par zéro comme le montre effectivement la figure 1. Pour le catalyseur C, les points de mesure ne contenant pas de matrice et donc pour lesquels $Al_2O_3$/(Zéolithe Y + $Al_2O_3$)=0 doivent contenir du $MoO_3$. Cela donne une relation linéaire entre concentration en $MoO_3$ et le rapport $Al_2O_3$/(Zéolithe Y + $Al_2O_3$) passant par la valeur moyenne de la concentration en $MoO_3$ dans la zéolithe comme le montre effectivement la figure 2.

La comparaison de la figure 1 et de la figure 2 montre clairement que l'ordonnée à l'origine indiquant la concentration en MoO3 du catalyseur analysé est nulle pour le catalyseur A (pas de Mo dans la Y) et de environ 1,1 % dans le cas du catalyseur C (environ 1,1 % de Mo dans la Y). On note dans les figures 1 et 2 que la même procédure peut être appliquée pour le nickel et que dans les deux cas l'ordonnée à l'origine indique l'absence de nickel dans la zéolithe ce qui est effectivement le cas pour les catalyseurs A et C exemplifiés ci-dessus.

**Exemple 5 : comparaison des catalyseurs en hydrocraquage d'un distillat sous vide à pression modérée.**

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| point initial | 365°C |
| point 10 % | 430°C |
| point 50 % | 472°C |
| point 90 % | 504°C |
| point final | 539°C |
| point d'écoulement | + 39°C |
| densité (20/4) | 0,921 |
| Soufre (% poids) | 2,38 |
| Azote (ppm poids) | 1130 |

L'unité de test catalytique comprend deux réacteurs en lit fixe, à circulation ascendante de la charge ("up-flow"). Dans chacun des réacteurs, on introduit 40 ml de catalyseur. Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit le catalyseur d'hydrocraquage (A, B, C ou D). Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée. La pression totale est de 8,5 MPa, le débit d'hydrogène est de 500 litres d'hydrogène gazeux par litre de charge injectée, la vitesse volumique horaire est de 0,8 $h^{-1}$. Les deux réacteurs fonctionnement à la même température.

Les performances catalytiques sont exprimées par la conversion brute à 400°C (CB), par la sélectivité brute (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{moins}} \text{ de l'effluent}$$

La sélectivité brute SB est prise égale à :

$$SB = 100 \text{*poids de la fraction (150°C-380°C)/poids de la fraction } 380°C^{\text{moins}} \text{ de l'effluent}$$

La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans le tableau suivant, nous avons reporté les caractéristiques des catalyseurs et leurs performances : conversion brute CB à 400°C, sélectivité brute SB, conversion en hydrodésulfuration HDS et la conversion en hydrodéazotation HDN pour les quatre catalyseurs.

|  | A | B | C | D |
|---|---|---|---|---|
| Zéolithe (%) | 16,2 | 62,1 | 16,2 | 60,4 |
| NiO (%) | 2,2 | 1,5 | 2,2 | 1,5 |
| MoO3(%) | 12,3 | 7,3 | 12,3 | 7,3 |
| P2O5 (%) | 4,4 | 2,5 | 4,4 | 2,5 |
| MoO3 dans zéolithe (% pds dans zéolithe) | 0 | 0 | 2,4 | 2,4 |
| CB (% poids) | 48,7 | 54,8 | 49,3 | 56,9 |
| SB | 80,3 | 72,6 | 82,0 | 79,9 |
| HDS (%) | 99,4 | 96,3 | 99,6 | 99,7 |
| HDN (%) | 96,6 | 87,1 | 97,8 | 98,9 |

La comparaison du catalyseur C avec le catalyseur A contenant la même quantité de zéolithe Y, de matrice oxyde, d'éléments hydro-deshydrogénant et de phosphore montre que la présence d'une phase hydrogénante contenue dans le réseau poreux de la zéolithe donne un meilleur niveau de conversion de la fraction 380°C$^{plus}$ que le catalyseur A n'en contenant pas. La sélectivité est du même niveau alors que les activités en HDS et en HDN est un peu augmentée. Dans le cas des catalyseurs B et D contenant une grande quantité de zéolithe on constate une très nette amélioration de la conversion, de la sélectivité et des activité HDS et HDN lorsque une fonction hydrogénante est présente dans le réseau poreux de la zéolithe. De plus, on observe qu'en comparant le catalyseur A et le catalyseur D, on obtient avec le catalyseur D une sélectivité équivalente, c'est-à-dire une bonne sélectivité, alors que la conversion a été très nettement augmentée. Par ailleurs, les catalyseurs C et D contenant du Mo dans le réseau poreux présentent l'avantage de donner de meilleures performances en hydrotraitement (hydrodésulfuration et hydrodéazotation).

**Exemple 4 : comparaison des catalyseurs en hydrocraquage d'un distillat sous vide à pression plus élevée**

Les catalyseurs dont les préparations sont décrites aux exemples précédents sont utilisés dans les conditions de l'hydrocraquage à pression élevé (12 MPa) sur une charge pétrolière dont les principales caractéristiques sont les suivantes :

| point initial | 277 °C |
|---|---|
| point 10 % | 381 °C |
| point 50 % | 482 °C |
| point 90 % | 531 °C |

(suite)

| | |
|---|---|
| point final | 545 °C |
| point d'écoulement | + 36 °C |
| densité (20/4) | 0.919 |
| Soufre (% poids) | 2.46 |
| Azote (ppm poids) | 930 |

L'unité de test catalytique comprend deux réacteurs en lit fixe, à circulation ascendante de la charge ("up-flow"). Dans chacun des réacteurs, on introduit 40ml de catalyseur. Dans le premier réacteur, celui dans lequel la charge passe en premier, on introduit le catalyseur « 1 » de première étape d'hydrotraitement HR360 vendu par la société Procatalyse comprenant un élément du groupe VI et un élément du groupe VIII déposés sur alumine. Dans le second réacteur, celui dans lequel la charge passe en dernier, on introduit le catalyseur « 2 » de deuxième étape c'est-à-dire le catalyseur d'hydroconversion. Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée. La pression totale est de 12 MPa, le débit d'hydrogène est de 1000 litres d'hydrogène gazeux par litre de charge injectée, la vitesse volumique horaire globale est de 0,9h-1. La température du premier réacteur est de 390°C.

Les performances catalytiques sont exprimées par la température qui permet d'atteindre un niveau de conversion brute de 70 % et par la sélectivité brute. Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{moins}} \text{ de l'effluent}$$

La sélectivité brute SB est prise égale à :

$$SB = 100^* \text{poids de la fraction } (150°C\text{-}380°C)/\text{poids de la fraction } 380°C^{\text{moins}} \text{ de l'effluent}$$

La température de réaction du deuxième réacteur contenant le catalyseur d'hydroconversion (A, B, C ou D) est fixée de façon à atteindre une conversion brute CB égale à 70% poids. Dans le tableau suivant, nous avons reporté la température de réaction et la sélectivité brute pour les quatre catalyseurs A, B, C et D.

| | T (°C) pour 70% conversion brute | SB |
|---|---|---|
| A | 386 | 65 |
| B | 366 | 43 |
| C | 384 | 67 |
| D | 365 | 64 |

L'utilisation du catalyseur B contenant une grande quantité de zéolithe Y par rapport au catalyseur A montre qu'en augmentant la quantité de zéolithe on augmente fortement l'activité du catalyseur indiquée par le niveau de température requis pour obtenir 70% de conversion de la charge mais conduit à une perte très importante de sélectivité. La présence d'une phase hydrogénante à l'intérieur du réseau poreux de la zéolithe, obtenue avec les échantillons C et D montre que l'on garde le très bon niveau de sélectivité du catalyseur A. L'échantillon D a une bien meilleure activité que le catalyseur C due à la présence d'une forte teneur en zéolithe. L'ajout d'un métal du groupe VIB au sein du réseau poreux de la zéolithe est donc particulièrement avantageux pour obtenir des catalyseurs d'hydrocraquage très actifs et très sélectifs en distillats moyens.

**Revendications**

1. Procédé de préparation d'un catalyseur contenant au moins une matrice, au moins une zéolithe et au moins un élément hydro-deshydrogénant localisé au niveau de la matrice et choisi dans le groupe formé par les éléments des groupes VIB et VIII, et dans lequel la zéolithe contient dans son réseau poreux au moins un élément du groupe VIB , le catalyseur comprenant en outre au moins un élément promoteur choisi dans le groupe formé par le bore et le phosphore, procédé comprenant les étapes suivantes:

   a) introduction d'au moins un métal du groupe VIB dans la zéolithe suivie d'une calcination sans séchage préalable, à une température de 250° à 800°C,
   b) mise en forme du mélange de la zéolithe contenant le métal du groupe VIB obtenue à l'étape a) avec la matrice oxyde pour obtenir le support , avec éventuelle introduction des éléments du groupe VIB et/ou VIII, non compris dans la zéolithe, du phosphore, bore, de l'élément du groupe VIIA et calcination à une température de 250 à 800°C.
   c) introduction des éléments du groupe VIB et/ou VIII, élément promoteur ,éventuel élément du GVIIA, par dépôt sur le support obtenu à l'étape b) lorsqu'ils n'ont pas été introduits en totalité lors de l'étape b).

2. Procédé selon la revendication 1 dans lequel l'élément promoteur est le phosphore.

3. Procédé selon l'une des revendications 1 ou 2 dans lequel lors de l'étape a), il est également introduit dans la zéolithe , avant calcination, au moins un métal du groupe VIII.

4. Procédé selon l'une des revendications 1 à 3 dans lequel la calcination de l'étape b) est précédée d'un séchage à une température comprise entre 60 et 250°C.

5. Procédé selon l'une des revendications 1 à 4 dans lequel l'introduction des éléments dans l'étape c) est suivie d'un séchage à une température comprise entre 60 et 250°C.

6. Procédé selon l'une des revendications 1 à 4 dans lequel l'introduction des éléments dans l'étape c) est suivi d'une calcination à une température de 250 à 800°C.

7. Procédé selon la revendication 5 dans lequel le séchage est suivi d'une calcination à une température de 250 à 800°C.

8. Procédé selon l'une des revendications précédentes, dans lequel la zéolithe est choisie dans le groupe formé par la zéolithe Y et la zéolithe bêta.

9. Procédé selon l'une des revendications précédentes, dans lequel la zéolithe est au moins en partie désaluminée.

10. Procédé selon l'une des revendications précédentes, dans lequel le catalyseur comporte en outre au moins une élément du groupe VII A.

11. Procédé selon l'une des revendications précédentes, dans lequel au moins un élément du groupe VIB et au moins un élément du groupe VIII sont déposés sur le catalyseur.

12. Procédé selon l'une des revendications précédentes, dans lequel la matrice est choisie dans le groupe formé par l'alumine et la silice-alumine.

13. Procédé selon l'une des revendications précédentes dans lequel le catalyseur contient du bore.

14. Procédé selon l'une des revendications 1 à 12 dans lequel le catalyseur contient de l'alumine, une zéolithe Y contenant dans son réseau poreux du molybdène, et du nickel, du molybdène et du phosphore déposés sur l'alumine.

15. Procédé selon l'une des revendications précédentes dans lequel le catalyseur contient en % poids du catalyseur final :

   - 0,1 à 98,7% de zéolithe
   - 1 à 99,7% de matrice
   - au moins l'un des éléments des groupes VIB et VIII à raison de 0,1-40% d'élément du groupe VIB et/ou 0,1 à 30% d'élément du groupe VIII (% poids d'oxyde)

- au plus 20% (% poids d'oxyde) d'au moins un élément promoteur choisi dans le groupe formé par le bore, le phosphore
- 0-20 % d'au moins un élément du groupe VIIA

et dans lequel la zéolithe contient dans son réseau poreux (en % poids d'oxyde dans le catalyseur) au moins un des éléments des groupes VIB à raison de 0,1-10% poids d'élément du groupe VIB.

16. Procédé selon l'une des revendications précédentes dans lequel le catalyseur est soumis à une sulfuration pour transformer au moins en partie les espèces métalliques en sulfures.

17. Catalyseur susceptible d'être obtenu par le procédé selon l'une des revendications 1 à 16.

18. Utilisation du catalyseur selon la revendication 17 ou obtenu par le procédé selon l'une des revendications de 1 à 16 pour la transformation de coupes hydrocarbonées.

19. Utilisation du catalyseur selon la revendication 18 pour l'hydrocraquage ou l'hydroraffinage.

20. Utilisation du catalyseur selon la revendication 19 pour l'hydrocraquage dans lequel la température est d'au moins 230°C, la pression est supérieure à 2MPa et inférieure ou égale à 12MPa, la quantité d'hydrogène est d'au moins 100 normaux litres par litres de charge, la vitesse volumique horaire est de 0,1-10h-1.

21. Utilisation du catalyseur selon la revendication 20 dans laquelle la pression est de 7,5 à 11MPa.

22. Utilisation du catalyseur selon la revendication 19 pour l'hydrocraquage dans lequel la pression est d'au moins 8,5MPa, laquelle la température est d'au moins 230°C, la quantité d'hydrogène est d'au moins 100 normaux litres par litres de charge, la vitesse volumique horaire est de 0,15-10h-1.


**Claims**

1. Process of preparation of a catalyst that contains at least one matrix, at least one zeolite and at least one hydrodehydrogenating element that is located at the matrix and selected from the group that is formed by the elements of groups VIB and VIII, and in which the zeolite contains in its porous network at least one element of group VIB, whereby the catalyst also comprises at least one promoter element that is selected from the group that is formed by boron, and phosphorus, which process comprises the following steps :

   a) introduction into the zeolite of at least one element of group VIB followed by calcination without prior drying, at a temperature of 250 to 800°C,
   b) shaping of the mixture of zeolite containing GVI metal obtained in step a) with the oxide matrix to obtain the substrate with optional introduction of GVIB and/or GVIII element, which are not included in zeolite, of phosphorus boron, GVII A element, and calcination at a temperature of 250-800°C,
   c) introduction by depositing on the substrate obtained in step b) of GVIB and/or GVIII elements, promoter elements, optional GVIIA element, when they have not been introduced in totality in step b).

2. Process according to claim 1 promoter element is phosphorus.

3. Process according to one of claims 1 or 2 wherein at least one metal of group VIII is also introduced into the zeolite, in step a) before calcination.

4. Process according to one of claims 1 to 3 wherein calcination in step b) is preceded by drying at a temperature comprised between 60 and 250°C.

5. Process according to one of claims 1 to 4 wherein the introduction of elements in step c) is followed by drying at a temperature comprised between 60 and 250°C.

6. Process according to one of claims 1 to 4 wherein the introduction of elements in step c) is followed by calcination at a temperature fo 250-800°C.

7. Process according to claim 5 wherein drying is followed by calcination at a temperature of 250-800°C.

8. Process according to one of the preceding claims, in which the zeolite is selected from the group that is formed by the Y zeolite and the beta zeolite.

9. Process according to one of the preceding claims, in which the zeolite is at least in part dealuminified.

10. Process according to one of the preceding claims wherein the catalyst also comprises at least one element of group VII A.

11. Process according to one of the preceding claims, in which at least one element of group VIB and at least one element of group VIII are deposited on the catalyst.

12. Process according to one of the preceding claims, in which the matrix is selected from the group that is formed by the alumina and the silica-alumina.

13. Process according to one of the preceding claims wherein the catalyst contains boron.

14. Process according to one of claims 1 to 12 wherein the catalyst comprises alumina, a Y zeolite that contains in its porous network molybdenum, and nickel, molybdenum and phosphorus deposited on the alumina.

15. Process according to one of the preceding claims wherein the catalyst contains in % by weight of the final catalyst:

   -- 0.1 to 98.7% of zeolite
   -- 1 to 99.7% of matrix,
   -- at least one of the elements of groups VIB and/or VIII at a ratio of 0.1-40% of an element of group VIB, and/or 0.1 to 30% of an element of group VIII (% by weight of oxide),
   -- at most 20% (% by weight of oxide) of at least one promoter element that is selected from the group that is formed by boron, and phosphorus
   -- 0-20% of at least one element of group VIIA,

   and in which the zeolite contains in its porous network (in % by weight of oxide in the catalyst) at least one of the elements of groups VIB at a ratio of 0.1-10% by weight of an element of group VIB.

16. Process according to one of the preceding claims wherein the catalyst is subjected to sulfurization for transforming at least partly the metallic radicals into sulfides.

17. Catalyst obtainable by the process according to one of claims 1 to 16.

18. Use of the catalyst according to claim 17 or obtained by the process according to one of claims 1 to 16, for the transformation of hydrocarbon fractions.

19. Use of the catalyst according to claim 18 for hydrocracking or hydrorefining.

20. Use of the catalyst according to claim 19 for hydrocracking in which the temperature is at least 230°C, the pressure is greater than 2 MPa and less than or equal to 12 MPa, the amount of hydrogen is at least 100 normal liters per liter of feedstock, and the hourly volumetric flow rate is 0.1-10 h-1.

21. Use of the catalyst according to claim 20, in which the pressure is 7.5 to 11 MPa.

22. Use of the catalyst according to claim 19 for hydrocracking in which the pressure is at least 8.5 MPa, in which the temperature is at least 230°C, the amount of hydrogen is at least 100 normal liters per liter of feedstock, and the hourly volumetric flow rate is 0.15-10 h-1.

**Patentansprüche**

1. Verfahren zur Herstellung eines Katalysators, der mindestens eine Matrix, mindestens einen Zeolithen und mindestens ein hydrierendesdehydrierendes Element enthält, das in der Matrix lokalisiert ist, und ausgewählt ist aus der Gruppe, gebildet aus den Elementen der Gruppen VIB und VIII, und wobei der Zeolith in seinem porösen Netzwerk mindestens ein Element der Gruppe VIB enthält, wobei der Katalysator ferner mindestens ein Promoter-Element umfasst, ausgewählt aus der Gruppe, gebildet aus Bor und Phosphor, wobei das Verfahren die folgenden Schritte umfasst:

a) Einführen mindestens eines Metalls der Gruppe VIB in den Zeolithen, gefolgt von einer Kalzinierung, ohne vorheriges Trocknen, bei einer Temperatur von 250 bis 800 °C,

b) Formen der Mischung des Zeolithen, der das Metall der Gruppe VIB enthält, der in Schritt a) erhalten wurde, mit der Oxidmatrix, um den Träger zu erhalten, gegebenenfalls mit dem Einführen der Elemente der Gruppe VIB und/oder VIII, die der Zeolith nicht umfasst, von Phosphor, Bor, dem Element der Gruppe VIIA, und Kalzinieren bei einer Temperatur von 250 bis 800 °C,

c) Einführen der Elemente der Gruppe VIB und/oder VIII, des Promoter-Elements, gegebenenfalls des GVIIA-Elements, durch Ablagerung auf dem Träger, der in Schritt b) erhalten wurde, wenn sie in Schritt b) nicht vollständig eingeführt wurden.

2. Verfahren nach Anspruch 1, wobei das Promoter-Element Phosphor ist.

3. Verfahren nach einem der Ansprüche 1 oder 2, wobei während des Schritts a) vor der Kalzinierung in den Zeolithen auch mindestens ein Metall der Gruppe VIII eingeführt wird.

4. Verfahren nach einem der Ansprüche 1 bis 3, wobei der Kalzinierung des Schritts b) eine Trocknung bei einer Temperatur im Bereich zwischen 60 und 250 °C vorausgeht.

5. Verfahren nach einem der Ansprüche 1 bis 4, wobei auf das Einführen der Elemente in Schritt c) eine Trocknung bei einer Temperatur im Bereich zwischen 60 und 250 °C folgt.

6. Verfahren nach einem der Ansprüche 1 bis 4, wobei auf das Einführen der Elemente in Schritt c) eine Kalzinierung bei einer Temperatur zwischen 250 und 800 °C folgt.

7. Verfahren nach Anspruch 5, wobei auf das Trocknen eine Kalzinierung bei einer Temperatur zwischen 250 und 800 °C folgt.

8. Verfahren nach einem der vorhergehenden Ansprüche, wobei der Zeolith ausgewählt ist aus der Gruppe, gebildet aus dem Y-Zeolithen und dem beta-Zeolithen.

9. Verfahren nach einem der vorhergehenden Ansprüche, wobei der Zeolith mindestens teilweise dealuminiert ist.

10. Verfahren nach einem der vorhergehenden Ansprüche, wobei der Katalysator ferner mindestens ein Element der Gruppe VIIA umfasst.

11. Verfahren nach einem der vorhergehenden Ansprüche, wobei mindestens ein Element der Gruppe VIB und mindestens ein Element der Gruppe VIII auf dem Katalysator abgelagert sind.

12. Verfahren nach einem der vorhergehenden Ansprüche, wobei die Matrix ausgewählt ist aus der Gruppe, gebildet aus Aluminiumoxid, und Siliciumdioxid-Alumininiumoxid.

13. Verfahren nach einem der vorhergehenden Ansprüche, wobei der Katalysator Bor enthält.

14. Verfahren nach einem der Ansprüche 1 bis 12, wobei der Katalysator Aluminiumoxid, einen Y-Zeolithen, der in seinem porösen Netzwerk Molybdän enthält, und Nickel und Molybdän und Phosphor enthält, die auf dem Aluminiumoxid abgelagert sind.

15. Verfahren nach einem der vorhergehenden Ansprüche, wobei der Katalysator, in Gew.-% des fertigen Katalysators, enthält

- 0,1 bis 98,7 % Zeolith
- 1 bis 99,7 % Matrix

- mindestens eines der Elemente der Gruppen VIB und VIII in einem Anteil von 0,1 bis 40 % des Elements der Gruppe VIB und/oder 0,1 bis 30 % des Elements der Gruppe VIII (Gew.-% des Oxids)
- höchstens 20 % (Gew.-% des Oxids) mindestens eines Promoter-Elements, ausgewählt aus der Gruppe, gebildet aus Bor, Phosphor,
- 0 bis 20 % mindestens eines Elements der Gruppe VIIA,

und wobei der Zeolith in seinem porösen Netzwerk (in Gew.-% des Oxids in dem Katalysator) mindestens eines der Elemente der Gruppen VIB in einem Anteil von 0,1 bis 10 Gew.-% des Elements der Gruppe VIB enthält.

16. Verfahren nach einem der vorhergehenden Ansprüche, wobei der Katalysator einer Schwefelbehandlung unterzogen wird, um die Metallspezies mindestens teilweise in Sulfide zu transformieren.

17. Katalysator, der geeignet ist, durch das Verfahren nach einem der Ansprüche 1 bis 16 erhalten zu werden.

18. Verwendung des Katalysators nach Anspruch 17, oder erhalten durch das Verfahren nach einem der Ansprüche 1 bis 16, zur Transformation von Kohlenwasserstoffschnitten.

19. Verwendung des Katalysators nach Anspruch 18 zum Hydrocracken oder zur Hydroraffination.

20. Verwendung des Katalysator nach Anspruch 19 zum Hydrocracken, wobei die Temperatur mindestens 230 °C beträgt, der Druck mehr als 2 MPa und weniger oder gleich 12 MPa beträgt, die Wasserstoffmenge mindestens 100 Normalliter je Liter Beschickung beträgt, die Volumengeschwindigkeit je Stunde 0,1 bis 10 $h^{-1}$ beträgt.

21. Verwendung des Katalysators nach Anspruch 20, wobei der Druck 7,5 bis 11 MPa beträgt.

22. Verwendung des Katalysators nach Anspruch 19 zum Hydrocracken, wobei der Druck mindestens 8,5 MPa beträgt, die Temperatur mindestens 230 °C beträgt, die Wasserstoffmenge mindestens 100 Normalliter je Liter Beschickung beträgt, die Volumengeschwindigkeit je Stunde 0,15 bis 10 $h^{-1}$ beträgt.

Figure 1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 3853747 A

**Littérature non-brevet citée dans la description**

• Handbook of Chemistry and Physics. 1995

• **BRUNAUER ; EMMETT ; TELLER.** *J. Am. Chem. Soc.,* 1938, vol. 60, 309-316